# EUROPEAN PATENT APPLICATION

(11) **EP 4 848 760 A1**
(43) Date of publication of application: **02.12.2026**
(21) Application number: 25223360.6
(22) Date of filing: 15.12.2025
(51) Int. Cl.: H04R 25/00, G01N 21/94, G02B 27/00

(54) **METHODS OF CALIBRATING A HEARING AID WITH A CAMERA, CALIBRATION CASES, AND HEARING AID SYSTEMS**

(71) Applicant: Oticon A/S, 2765 Smørum (DK)
(72) Inventor: RIEMER, Lars, DK-2765 Smørum (DK)
(74) Representative: Demant

(57) **Abstract**

A method of operating a hearing aid is disclosed. The method comprising: obtaining, by an image sensor of the hearing aid, image data of a lens of the image sensor; comparing, by a processor of the hearing aid, the image data with a previous image data indicative of the lens when it was in a satisfactory condition for determination of a difference; upon a determination that the difference between the previous image data and the image data is above a threshold, determining, by the processor, first data indicative of the difference between above the threshold; and outputting, by the processor, the first data.

## Description

### TECHNICAL FIELD

The present disclosure relates to the field of hearing aids. In particular, the present disclosure relates to methods of calibrating a hearing aid with a camera, as well as calibration cases and hearing aid systems.

### BACKGROUND

Previously disclosed are hearing aids with image sensors, such as camera. As a camera is "seeing" the world using light, it is vulnerable to dirt and dust on its lens. Additionally, a hearing aid is in a very aggressive environment, with sweat, earwax, hair and dandruff potentially blocking the camera. Handling the hearing aid can also cause permanent scratches on the lens.

Accordingly, end-users should clean the camera lens regularly, as well as inspect it for scratches. However, end-users have the tendency to forget this task, thereby leading to worse camera performance. Additionally, a significant portion of end-users also have impaired vision, making inspection difficult to impossible.

### SUMMARY

### Method of operating a hearing aid:

In an aspect of the present disclosure, methods of operating a hearing aid are disclosed. The method includes obtaining, by an image sensor of the hearing aid, image data of a lens of the image sensor. The method includes comparing, by a processor of the hearing aid, the image data with a previous image data indicative of the lens when it was in a satisfactory condition for determination of a difference. Upon a determination that the difference between the previous image data and the image data is above a threshold, the method includes determining, by the processor, first data indicative of the difference between above the threshold. The method includes outputting, by the processor, the first data

Advantageously, the disclosed method can allow for improved inspection of a hearing aid with an image sensor. This can lead to improved performance of the hearing aid, as certain issues with the image sensor will be determined by the method. Further, the disclosed method removes the need for a user to inspect the image sensor, which may be difficult for users with vision impairment, or just forgetting.

Further disclosed herein are embodiments of a calibration case for a hearing aid. The calibration case can include a receiver component configured to receive and retain a first hearing aid having an image sensor and an image sensor lens. The calibration case can include an image sensor path configured for allowing the image sensor to obtain image data of the image sensor lens and/or previous image data of the image sensor lens, wherein the image sensor path comprises a plurality of reflective surfaces. In certain examples, the calibration case can include a charging interface configured to charge the first hearing aid. For example, a calibration case with a charging interface may be considered a charging case.

Advantageously, the disclosed calibration case can allow for improved inspection of a hearing aid with an image sensor. This can lead to improved performance of the hearing aid, as certain issues with the image sensor will be determined via the calibration case. Further, the disclosed calibration case removes the need for a user to inspect the image sensor, which may be difficult for users with vision impairment, or just forgetting.

Further disclosed herein are embodiments of a hearing aid system. The hearing aid system can include a hearing aid configured to perform the disclosed herein. The hearing aid system can include a calibration case as disclosed herein configured to provide the image data to the hearing aid.

The hearing aid system can include the advantages discussed herein with respect to the method and/or the calibration case.

Disclosed herein are methods of operating a hearing aid. For example, disclosed herein are methods of calibrating a hearing aid. The hearing aid can be behind-the-ear (BTE) hearing aid.

The method can include obtaining, by an image sensor of the hearing aid, image data of a lens of the image sensor.

In one or more example methods, the image sensor can be a camera. In one or more example methods, the camera is an infrared and/or a visible spectrum camera.

The image sensor can be a video camera. The image sensor can include a lens. The image sensor can include a plurality of lenses.

The image data can be a still image. The image data can be a video image.

The image data may be an image of the lens. The image data may be a representative of an image of the lens. For example, the image data may be an image of a reference image of the lens.

The image sensor can obtain the image data of the lens of the image sensor. For example, the image sensor can obtain the image data via a reflection of the lens. For example, the image sensor can obtain the image data via a mirror. A first image sensor of a first hearing aid may obtain an image data of a second image sensor of a second hearing aid. A second image sensor of a second hearing aid may obtain an image data of a first image sensor of a first hearing aid. The hearing aid (e.g., the first hearing aid) can obtain the image data from the second hearing aid.

The method can include comparing, by a processor of the hearing aid, the image data with a previous image data indicative of the lens when it was in a satisfactory condition for determination of a difference. Satisfactory condition can include the lens lacking coverage by sweat, earwax, hair, dandruff, damage, etc.

The previous image data (e.g., test data) can be stored in the hearing aid, such as in memory of the hearing aid. The stored image data can be stored in an accessory device, such as a calibration case. The previous image data can be stored in a second accessory device, such as a cellular phone. The method can include, in some examples, obtaining the previous image data.

The previous image data can be obtained by the image sensor. For example, previous image data can be a physical image. The image sensor can capture the previous image data from the physical image.

In one or more example methods, previous image data indicative of the lens when it was in a satisfactory condition is indicative of the lens when new.

In one or more example methods, previous image data indicative of the lens when it was in a satisfactory condition is indicative of the lens at a particular time.

The previous image data can be set by a user and/or a hearing care professional. The previous image data can be image data from when the lens condition was not degraded. The previous image data can be image data from when the lens condition was not degraded beyond a threshold. The previous image data can be image data from when the lens condition was clean.

While a lens can be used in a typical image sensor, other types of image sensor can be used as well. For example, pinhole cameras. The "lens condition" and the "lens" can be understood as equivalents to other image sensor technology.

The method can include comparing the image data with the previous image data for determination of a difference. The comparison can be performed by a neural network of the hearing aid. The comparison can be performed by a neural network of an accessory device. The comparison can be performed by other image processing systems. The difference can be indicative of a number of differences between the image data and the previous image data. The difference can be indicative of a severity of differences between the image data and the previous image data.

The method can include, upon a determination that the difference between the previous image data and the image data is above a threshold, determining, by the processor, first data indicative of the difference between above the threshold. The threshold can be set by a user and/or a hearing care professional.

The first data can be indicative of a status (e.g., condition) of the lens. The first data can be binary data (e.g., indicative of whether the lens is "bad" or "good"). The first data can be indicative of a current status of the lens. The first data can be a ranking of the status of the lens. The first data can be indicative that the lens should be cleaned and/or replaced.

The method can include, upon a determination that the difference between the previous image data and the image data is at or below a threshold, not determining, by the processor, first data indicative of the difference between above the threshold. For example, the lens may be in good shape and thus no action need be taken.

The method can include outputting, by the processor, the first data. In one or more example methods, outputting the first data comprises providing an audio sound, based on the first data, to a user. Outputting can include outputting audio to a user indicative of the first data. For example, the method can include providing an audio notification to a user of "Lens cleaning needed".

Outputting can include outputting an indicator on the hearing aid. The indicator can be, for example, a light or a vibration.

In one or more example methods, outputting the first data comprises transmitting the first data to a second accessory device. The second accessory device can be a phone. The second accessory device can be a hearing care professional's device (e.g., computer, phone, tablet, etc.). For example, the method can include outputting the first data to a phone, and subsequently the phone provides a notification to the user.

In one or more example methods, outputting comprises comprising transmitting, by a transceiver of the hearing aid, to a second accessory device, the image data.

In one or more example methods, obtaining the image data comprises obtaining, from a reflection of the lens by an accessory device, the image data and/or the previous image data.

In one or more example methods, the accessory device is a calibration case configured for charging the hearing aid.

In one or more example methods, the method can include obtaining, by the image sensor of the hearing aid, from the accessory device, the previous image data indicative of the lens when it was in a satisfactory condition.

In one or more example methods, the method can include obtaining, by the hearing aid, from a memory of the hearing aid, the previous image data indicative of the lens when it was in a satisfactory condition.

### Calibration case:

Further disclosed herein is a calibration case for a hearing aid. The calibration case can include a receiver component configured to receive and retain a hearing aid having an image sensor and an image sensor lens. The calibration case can have a plurality of receiver components, each receiver component configured to receive and retain a hearing aid (e.g., a left hearing aid and a right hearing aid). The calibration case can include an image sensor path configured for allowing the image sensor to obtain image data of the image sensor lens and/or previous image data of the image sensor lens. In certain examples, the image sensor path comprises a plurality of reflective surfaces. The reflective surfaces can be, for example, mirrors. In one or more example embodiments, a single mirror is used in the image sensor path.

The calibration case can be configured to retain a physical image of previous image data. For example, a printed photograph can be retained by the hearing aid. The calibration case can include memory. The previous image data can be stored in the memory. The calibration case can be configured to transmit the previous image data to the hearing aid. The calibration case can be configured to receive the image data from the hearing aid. The calibration case can include a neural network configured to operate the method disclosed herein.

In one or more example calibration cases, the calibration case comprises stored image data indicative of the lens when it was in a satisfactory condition. The calibration case can be configured to provide the stored image data to the hearing aid.

In certain examples, the calibration case can further include a charging interface configured to charge the hearing aid (e.g., a charging case). The charging interface can be a contact charging interface. The charging interface can be a wireless (e.g., inductive) charging interface.

Having the calibration case with a charging interface (e.g., charging case) can advantageously handle both calibration and charging.

Having the calibration case without a charging interface can be advantageous for a number of reasons:
- Less handling, so less risk of dirtying mirrors and test image.
- "Single Responsibility" - a charging case charges and a calibration case calibrates.
- Simple, possible non-electronic device.
- End-user who has already bought a non-calibrating charger can keep the charger and extend the system when he gets camera-HIs.

### Hearing aid system:

A hearing aid system is further disclosed. The hearing aid system can include a hearing aid configured to perform the method disclosed herein. The hearing aid system can include a pair of hearing aids. The hearing aid system can include a calibration case as disclosed herein. In certain examples, the calibration case can be configured to provide the image data to the hearing aid.

### Hearing aid:

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal.

The hearing aid may comprise an output unit for providing a stimulus perceived by the user as an acoustic signal based on a processed electric signal. The output unit may be a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

Most sound signal sources (except the user's own voice) are located far way from the user compared to dimensions of the hearing aid, e.g. a distance d_{mic} between two microphones of a directional system. A typical microphone distance in a hearing aid is of the order 10 mm. A *minimum* distance of a sound source of interest to the user (e.g. sound from the user's mouth or sound from an audio delivery device) is of the order of 0.1 m (> 10 d_{mic}). For such minimum distances, the hearing aid (microphones) would be in the acoustic near-field of the sound source and a difference in level of the sound signals impinging on respective microphones may be significant. A *typical* distance for a communication partner is more than 1 m (>100 d_{mic}).

The hearing aid (microphones) would be in the acoustic far-field of the sound source and a difference in level of the sound signals impinging on respective microphones is insignificant. The difference in *time of arrival* of sound impinging in the direction of the microphone axis (e.g. the front or back of a normal hearing aid) is ΔT= d_{mic}/v_{sound}=0.01/343 [s]=29 µs, where v_{sound} is the speed of sound in air at 20°C (343 m/s).

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a 'forward' (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency fₘᵢₙ to a maximum frequency fₘₐₓ may comprise a part of the typical human audible frequency range from 20 Hz to 20 kHz, e.g. a part of the range from 20 Hz to 12 kHz. Typically, a sample rate fₛ is larger than or equal to twice the maximum frequency fₘₐₓ, fₛ ≥ 2fₘₐₓ. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels (*NP* ≤ *NI*). The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well. In the present context 'a current situation' may be taken to be defined by one or more of
a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user.

### Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 shows an example method of operating a hearing aid according to the disclosure,
FIG. 2A shows a schematic view of an example calibration case and hearing aid system according to the disclosure, and
FIG. 2B shows a schematic view of an example calibration case and hearing aid system according to the disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of hearing aids.

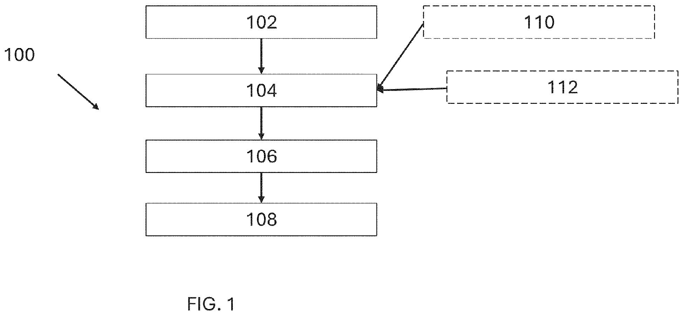

FIG. 1 shows an example method of operating a hearing aid according to the disclosure. As shown, the method 100 of operating a hearing aid includes obtaining 102, by an image sensor of the hearing aid, image data of a lens of the image sensor. The method 100 includes comparing 104, by a processor of the hearing aid, the image data with a previous image data indicative of the lens when it was in a satisfactory condition for determination of a difference. Upon a determination that the difference between the previous image data and the image data is above a threshold, the method 100 includes determining106, by the processor, first data indicative of the difference between above the threshold. The method 100 includes outputting 108, by the processor, the first data.

Obtaining 102 the image data can include obtaining, from a reflection of the lens by an accessory device, the image data and/or the previous image data.

The accessory device can be a calibration case configured for charging the hearing aid. The image sensor is a camera. The camera is an infrared and/or visible spectrum camera.

Outputting 108 the first data can include providing an audio sound, based on the first data, to a user.

Outputting 108 the first data can include transmitting the first data to a second accessory device.

Outputting 108 can include transmitting, by a transceiver of the hearing aid, to a second accessory device, the image data.

The previous image data can be indicative of the lens when it was in a satisfactory condition is indicative of the lens when new. The previous image data can be indicative of the lens when it was in a satisfactory condition is indicative of the lens at a particular time.

Optionally, the method 100 can further include obtaining 110, by the image sensor of the hearing aid, from the accessory device, the previous image data indicative of the lens when it was in a satisfactory condition.

Optionally, the method 100 can further include obtaining 112, by the hearing aid, from a memory of the hearing aid, the previous image data indicative of the lens when it was in a satisfactory condition.

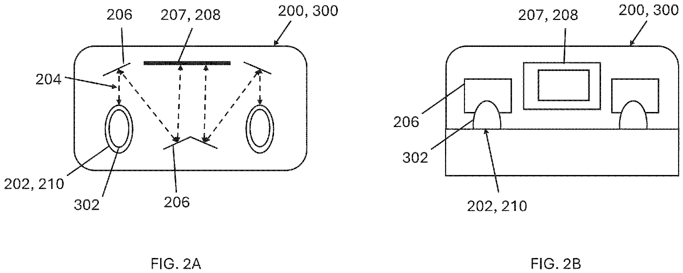

FIG. 2A shows a schematic view of an example calibration case and hearing aid system according to the disclosure. In particular, FIG. 2A illustrates a top-down schematic view of a calibration case 200. The calibration case 200 can form a part of the hearing aid system 300 with a hearing aid 302.

The calibration case 200 can include a receiver component 202 configured to receive and retain a hearing aid 302 having an image sensor and an image sensor lens. The calibration case 200 can include an image sensor path 204 configured for allowing the image sensor to obtain image data of the image sensor lens and/or previous image data 208 of the image sensor lens. FIG. 2A merely illustrates an example image sensor path 204, and other sensor paths can be used. For example, the calibration case 200 can include a mirror (or other reflective surface) 207 which allows the image sensor to obtain image data of its lens. Further, in certain examples, the calibration case 200 can include stored image data 208 indicative of the lens when it was in a satisfactory condition. The stored image data 208 can be a physical image, such as shown in FIG. 2A. The stored image data 208 can be stored in the calibration case 200, such as in its memory. The calibration case 200 can then provide the stored image data 208 to the hearing aid 302.

The image sensor path 204 comprises a plurality of reflective surfaces 206.

The calibration case 200 can optionally include a charging interface 210 configured to charge the hearing aid 302 (e.g., calibration case 200 can be a charging case). The charging interface 210 can be a contact charging interface or a wireless charging interface.

Further, as shown in FIG. 2A, the calibration case 200 can store a plurality of hearing aids. Each hearing aid can include a separate image sensor path.

Advantageously, FIG. 2A shows a calibration case 200 with optical calibration hardware. A combination of mirrors, test pictures, LEDs, holograms, and prisms can allow the hearing aid 302 to take a snapshot of, for example, the test picture when inserted in the calibration case, 200 and compare the snapshot to a reference picture (e.g., previous image data 208).

FIG. 2B shows a schematic view of an example calibration case and hearing aid system according to the disclosure. In particular, FIG. 2B illustrates a side schematic view of a calibration case 200. The calibration case 200 can form a part of the hearing aid system 300 with a hearing aid 302.

It is intended that the structural features of the devices described above, either in the detailed description and/or in the claims, may be combined with steps of the method, when appropriately substituted by a corresponding process.

The hearing aid can be configured to request lens cleaning/replacement/repair by an audible signal, LED signalling, or by an application. The calibration case can use mirrors, prisms and lenses to extend the distance from image sensor to test picture (e.g., previous image data). The test picture can be specific to each hearing aid (Left or Right), or a prism (or other) can be used to combine the two paths to end at the same test picture. The prisms and lenses can be the usual glass or plastic, or holographic implementations.

The test picture (e.g., previous image data) can be a static picture, or it can be an active screen capable of showing multiple test pictures under control of the calibration case or hearing aid.

An initial calibration can be done at by the hearing care professional, where the hearing aid can take the reference snapshot in the calibration case. This can avoid production variation on the optical path to reduce effectiveness.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A method of operating a hearing aid, the method comprising:
obtaining, by an image sensor of the hearing aid, image data of a lens of the image sensor;
comparing, by a processor of the hearing aid, the image data with a previous image data indicative of the lens when it was in a satisfactory condition for determination of a difference;
upon a determination that the difference between the previous image data and the image data is above a threshold, determining, by the processor, first data indicative of the difference between above the threshold; and
outputting, by the processor, the first data.

2. The method of any one of the preceding claims, wherein obtaining the image data comprises obtaining, from a reflection of the lens by an accessory device, the image data and/or the previous image data.

3. The method of claim 2, wherein the accessory device is a charging case configured for charging the hearing aid or a calibration case.

4. The method of any one of the preceding claims, wherein the image sensor is a camera.

5. The method of claim 4, wherein the camera is an infrared and/or visible spectrum camera.

6. The method of any one of the preceding claims, wherein outputting the first data comprises providing an audio sound, based on the first data, to a user.

7. The method of any one of the preceding claims, wherein outputting the first data comprises transmitting the first data to a second accessory device.

8. The method of any one of the preceding claims, wherein the previous image data is indicative of the lens when it was in a satisfactory condition is indicative of the lens when new.

9. The method of any one of the preceding claims, wherein the previous image data is indicative of the lens when it was in a satisfactory condition is indicative of the lens at a particular time.

10. The method of any one of the preceding claims, further comprising obtaining, by the image sensor of the hearing aid, from the accessory device, the previous image data indicative of the lens when it was in a satisfactory condition.

11. The method of any one of claims 1-9, further comprising obtaining, by the hearing aid, from a memory of the hearing aid, the previous image data indicative of the lens when it was in a satisfactory condition.

12. The method of any one of the previous claims, wherein outputting comprises comprising transmitting, by a transceiver of the hearing aid, to a second accessory device, the image data.

13. A calibration case for a hearing aid, the calibration case comprising:
a receiver component configured to receive and retain a hearing aid having an image sensor and an image sensor lens; and
an image sensor path configured for allowing the image sensor to obtain image data of the image sensor lens and/or previous image data of the image sensor lens, wherein the image sensor path comprises a plurality of reflective surfaces.

14. The calibration case of claim 13, wherein the calibration case comprises a charging interface configured to charge the hearing aid.

15. The calibration case according to claim 13 or claim 14, wherein the calibration case comprises stored image data indicative of the lens when it was in a satisfactory condition, wherein the calibration case is configured to provide the stored image data to the hearing aid.
